# EUROPÄISCHE PATENTSCHRIFT

(11) **EP 3 577 043 B1**
(45) Veröffentlichungstag und Bekanntmachung des Hinweises auf die Patenterteilung: **09.04.2025**
(21) Anmeldenummer: 17832774.8
(22) Anmeldetag: 20.12.2017
(51) Int. Cl.: B65G 39/02, B65G 13/10

(54) **FÖRDEREINHEIT MIT EINSTELLBAREN TRANSPORTROLLEN**
CONVEYOR UNIT COMPRISING ADJUSTABLE TRANSPORT ROLLERS
CONVOYEUR COMPRENANT DES GALETS TRANSPORTEURS RÉGLABLES

(30) Priorität: 02.02.2017 EP 17154325
(43) Veröffentlichungstag der Anmeldung: 11.12.2019
(73) Patentinhaber: Körber Supply Chain Logistics GmbH, 78467 Konstanz (DE)
(72) Erfinder: ASCHPURWIS, Carsten, 78464 Konstanz (DE); FRÖHLICH, Thomas, 78476 Allensbach (DE)
(74) Vertreter: Müller Schupfner & Partner Patent- und Rechtsanwaltspartnerschaft mbB (Muc)
(86) Internationale Anmeldenummer: PCT/EP2017/083720
(87) Internationale Veröffentlichungsnummer: WO 2018/141459

(56) Entgegenhaltungen:
- EP-A1- 1 375 389
- EP-A1- 1 375 389
- EP-A1- 1 947 035
- EP-A1- 1 947 035
- US-A- 5 921 374
- US-A1- 2016 145 053
- US-A1- 2016 145 053

## Beschreibung

Die vorliegende Erfindung betrifft das technische Gebiet der Fördersysteme für Güter, insbesondere auf Fördersysteme, die ein gerichtetes Fördern und eine Veränderung der Ausrichtung von Gütern erlauben.

Ein gerichtetes Fördern von Gütern in einstellbare Transportrichtungen auf einer Förderstrecke hat besondere Bedeutung in Sortieranlagen, insbesondere Post- und Gepäcksortieranlagen, und Fertigungsanlagen. Eine in die Förderstrecke integrierte Lösung zum Einstellen der Transportrichtungen kann teure Komponenten, beispielsweise einen Eckumsetzer, überflüssig machen. Auch die Veränderung der Ausrichtung eines Gutes - während des Transports oder ohne Positionsveränderung - kann für ein automatisiertes Erfassen vorteilhaft sein. Die geschickte Manipulation eines Güterstroms erlaubt die Verwendung eines Fördersystems über das normale Transportieren hinweg und ermöglicht Puffern, Vereinzeln, Spurwechsel durch Lenken, Rotieren im Stillstand oder im laufenden Transport, Ausschleusen, Einschleusen, Kreuzungsfunktion.

Stand der Technik zum gerichteten Fördern ist die Verwendung von Schwenkrollen, welche auf einer vertikalen Achse gelagert sind. Um diese Achse werden die Schwenkrollen einzeln oder als Zeile über Lenker in ihrer Winkeleinstellung verändert. Auch verwendet werden orthogonal freidrehende, gemeinsam antreibbare Rollen. Wenn in eine spezifische Richtung aktiv gefördert werden soll, werden zusätzliche Rollen an ein Gut hochgefahren. Eine weitere Lösung verwendet eine zylindrische, in einem Gliedergurt schräg angeordnete Rolle. Ein Quertransport wird ausgelöst, indem eine Reibfläche von unten an den Gliedergurt gebracht wird, wodurch die zylindrische Rolle eine Zwangsbewegung ausführt.

Die US 2016/145053 A1 betrifft eine Fördervorrichtung mit für insbesondere Holz, die Werkstücke positioniert, transportiert und beschleunigt, um systematische Anforderungen zu erfüllen. US 2016/145053 A1 offenbart eine Fördereinheit nach dem Oberbegriff des Anspruchs 1 und ein Verfahren nach dem Oberbegriff des Anspruchs 9.

Die US 5 921 374 A betrifft eine Sortier- und Ausschussvorrichtung, um Gegenstände mit einer Vielzahl von sphärischen Sortierrollen entlang einer Förderrichtung und einer transversalen Richtung zu fördern.

Bei den oben dargestellten Lösungen können die Transportrollen nur gemeinsam diskret zwischen zwei oder drei Positionen hin- und hergeschwenkt werden und werden gemeinsam angetrieben. Ein individuelles Einstellen einzelner Transportrollen ist nicht möglich, so dass das die Möglichkeiten des gerichteten Förderns und des Manipulierens der Ausrichtung des Gutes beschränkt sind. Eine unterschiedliche Behandlung nebeneinander beförderter Güter ist nicht möglich. Auch die Veränderung der Ausrichtung eines Gutes während des Transports ist nur in beschränktem Maße möglich. Daher ist eine verbesserte Lösung erforderlich, die ein vielfältiges.

Der vorliegenden Erfindung liegt daher die Aufgabe zugrunde, eine Fördereinheit und ein Verfahren zum Einstellen einer Fördereinheit bereit zu stellen, um ein Gut mit geringem Aufwand und dennoch mit vielen Freiheitsgraden transportieren kann. Diese Aufgabe wird durch die in den unabhängigen Ansprüchen beschriebenen Lösungen gelöst.

Die erfindungsgemäße Lösung sieht eine Fördereinheit zum Transport von Gütern auf einer Transportebene umfassend Transportrollen vor, wobei die Transportrollen mit einstellbarer Drehzahl und einstellbarer Drehrichtung um ihre jeweiligen Drehachsen rotierbar sind, die Drehachsen der Transportrollen um ihre jeweiligen Schwenkachsen um einen eigenen Schwenkachsenwinkel durch Rotation verstellbar sind und mindestens zwei der Transportrollen voneinander abweichend einstellbar sind.

Unter einer voneinander abweichenden Einstellbarkeit soll hierbei eine individuelle Einstellbarkeit von einzelnen Transportrollen oder von Transportrollengruppen verstanden werden bezüglich der Parameter Drehzahl, Drehrichtung und Schwenkachsenwinkel, wobei die individuelle Einstellbarkeit nur einen, zwei oder alle der Parameter umfasst. Die prinzipiell mögliche individuelle Einstellbarkeit umfasst auch eine gleiche Einstellung dieser Parameter.

Die erfindungsgemäße Fördereinheit eignet sich je nach Ausgestaltung für unterschiedliche Arten von Gütern, beispielsweise Pakete, Päckchen, Briefe und weitere Postsendungen, Koffer und Gepäckstücke, Kisten, Gebinde und kommissionierbare Stückgüter. Es können gleichartige oder unterschiedliche Güter transportiert werden. Unter Transportieren soll neben einem gerichteten Fördern im weiteren Sinne auch eine Ausrichtungsveränderung des Gutes mit oder ohne Veränderung seines Schwerpunkts verstanden werden. Mit der erfindungsgemäßen Fördereinheit können Güter so über ein normales Geradeausfördern hinaus manipuliert werden.

Um eine konstruktiv einfache Anordnung und Lagerung der Transportrollen zu ermöglichen und auch um die Berechnung einer resultierenden Transportrichtung und Transportgeschwindigkeit einer Transportrolle nicht unnötig zu verkomplizieren, ist die Drehachse im Wesentlichen parallel zur Transportebene und die Schwenkachse im Wesentlich orthogonal zur Transportebene angeordnet.

Gemäß der Erfindung sind die Transportrollen in einem für einen Kontakt mit den Gütern vorgesehenen Bereich eine ballige Oberfläche aufweisen. Im Vergleich zu einer zylindermantelartigen Oberfläche ist bei einer balligen Oberfläche eine Veränderung des Schwenkachsenwinkels leichter möglich. Außerdem weist eine ballige Oberfläche weniger Störkonturen auf. Eine Kugeloberfläche ist eine Sonderform einer balligen Oberfläche.

Um ein gleichzeitiges Verstellen der Drehachsen mehrerer Transportrollen zu vereinfachen, umfasst die Fördereinheit eine Verstellvorrichtung, welche ausgestaltet ist, die Schwenkachsenwinkel von zwei oder mehr Transportrollen gemeinsam zu verstellen. Diese Verstellvorrichtung ermöglicht eine reduzierte Bauweise der Fördereinheit. Durch voneinander abweichende Einstellung der Drehzahl und/ oder der Drehrichtung kann das Gut dennoch weiterhin mit vielen Freiheitsgraden transportiert werden.

Erfindungsgemäß, umfassen die Transportrollen eigene, in die jeweilige Transportrolle integrierte, Antriebsmittel.

Um die Transportrollen anzutreiben, kann die Fördereinheit ansteuerbare Antriebsmittel zum Antreiben einer Transportrolle umfassen. Dies ermöglicht auf unkomplizierte Weise ein gesteuertes, individuelles Antreiben einzelner Transportrollen und somit auf besonders einfache Art eine über das einfache Transportieren hinausgehende Verwendung der Fördereinheit auch bei übereinstimmenden Schwenkachsenwinkeln.

Gemäß einer weiteren Ausführungsform können die Antriebsmittel als Servoantriebe ausgestaltet sein. Dies ermöglicht mit einfach erhältlichen Komponenten eine robuste und genaue Lage-, Geschwindigkeits- und/ oder Momentenregelung der Transportrollen der Fördereinheit.

Um eine noch höhere Variabilität des Transportierens zu ermöglichen, können die Transportrollen in positiver Drehrichtung und/ oder negativer Drehrichtung antreibbar sein.

Um eine Feineinstellung der Transportrichtung einer oder mehrerer Transportrollen zu ermöglichen, kann der Schwenkachsenwinkel kontinuierlich einstellbar sein.

Um ein koordiniertes Einstellen der Transportrollen zu vereinfachen, können zwei oder mehr Transportrollen geordnet angeordnet sein, beispielsweise entlang einer Linie oder kreisförmig. Diese vereinfacht ein kontrolliertes Einstellen aller Transportrollen der Fördereinheit. Die geordnete Anordnung kann mit mehreren Fördereinheiten auch mehrfach realisiert werden.

Um einen verbesserten Reibschluss zwischen Transportrolle und Gut zu realisieren, kann die in einem für einen Kontakt mit den Gütern vorgesehenen Bereich umlaufende Oberfläche einer Transportrolle hinsichtlich Kontur und/ oder Oberflächenbeschaffenheit für den Transport der Güter optimiert ausgebildet sein. Ein verbesserter Reibschluss erlaubt ein äußerst präzises Transportieren, da dies mit einer Verringerung unkontrollierter Bewegungen des Gutes, beispielsweise Gleiten, einhergeht.

Gemäß einer weiteren Ausführungsform kann die Fördereinheit eine Steuereinheit umfassen, welche ausgestaltet ist, die Transportrollen anzusteuern. Dies ermöglicht ein ansteuerbares Einstellen von Schwenkachsenwinkel, Drehzahl und/ oder Drehrichtung der Transportrollen.

Um ein noch weiter optimiertes Ansteuern der Transportrollen zu ermöglichen, kann die Steuereinheit ausgestaltet sein, die Transportrollen in Abhängigkeit von Position und/ oder Ausrichtung eines oder mehrerer Güter anzusteuern. Dieses Ansteuern kann manuell und/ oder automatisiert erfolgen.

Hinsichtlich eines Verfahrens wird die vorstehend genannte Aufgabe gelöst durch ein Verfahren nach Anspruch **9.**

Um auf vielfältige Weise ein über ein lineares Transportieren eines Gutes herausgehendes Manipulieren eines Gutes zu ermöglichen, können Drehzahl und/ oder Drehrichtung und/ oder Schwenkachsenwinkel von mindestens zwei der Transportrollen der Fördereinheit voneinander abweichend eingestellt werden.

Gemäß einer weiteren Ausführungsform können zwei oder mehr Fördereinheiten koordiniert eingestellt werden. Dies ermöglicht eine Beeinflussung eines Gutes über einen größeren Bereich und ermöglicht so: Abbremsen und Beschleunigen, Puffern, Vereinzeln, Spurwechsel durch Lenken, Rotieren im Stillstand oder im laufenden Transport, Ausschleusen, paralleles Ausschleusen mehrerer Güter, Ausschleusen an einem bestimmten Punkt mit gleichzeitigem Ausrichten, Einschleusen, Kreuzungsfunktion, gezieltes Verschieben von Lücken zwischen Gütern, Verändern der Güterabfolge und mehr.

Ausführungsformen der Erfindung werden nachfolgend anhand der Figuren beispielsweise näher erläutert. Dabei zeigen:
- Figur 1: eine Fördereinheit mit allen Freiheitsgraden;
- Figur 2: einen Ausschnitt einer weiteren Fördereinheit mit voneinander abweichend eingestellten Transportrollen;
- Figur 3: eine Fördereinheit mit einer gemeinsamen Verstellvorrichtung für alle Transportrollen;
- Figur 4: eine Fördereinheit mit einer eigenen Verstellvorrichtung für jede Transportrolle;
- Figur 5: eine modulare Fördereinheit mit geordnet entlang einer Linie angeordneten Transportrollen;
- Figur 6: eine weitere Fördereinheit in Aufsicht.

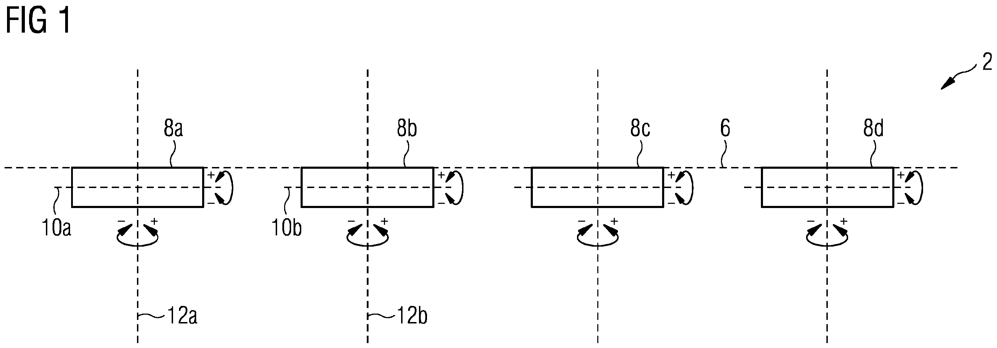

Figur 1 zeigt in einem seitlichen Querschnitt die Freiheitsgrade einer Fördereinheit 2. Die Fördereinheit 2 umfasst Transportrollen 8a - 8d mit jeweils eigener Drehachse 10a - 10d und eigener Schwenkachse 12a - 12d, wobei die Transportrollen 8a - 8d eine Transportebene 6 aufspannen. Durch Antreiben der Transportrollen 8a - 8d kann ein hier nicht dargestelltes, auf mindestens einer der Transportrollen 8a - 8d aufliegendes Gut 4 entlang der Transportebene 6 transportiert und/ oder in seiner Ausrichtung verändert werden - gleichzeitig oder sequentiell. Die Transportrollen 8a - 8d sind um ihre jeweiligen Drehachsen 10a - 10d mit einstellbarer Drehzahl und einstellbarer Drehrichtung rotierbar. Die Drehzahlen können in Betrag und/ oder Vorzeichen miteinander übereinstimmen und/ oder ganz oder gruppenweise voneinander abweichen. Eine positive Drehzahl entspricht einer positiven Drehrichtung, eine negative Drehzahl einer negativen Drehrichtung. Die Transportrollen 8a - 8d sind mit ihren Drehachsen 12a - 12d um eigene Schwenkachsenwinkel 14a - 14d drehbar, wodurch ihre jeweiligen Transportrichtungen 34a - 34d einstellbar sind. Die Transportrollen 8a - 8d haben also drei einstellbare Freiheitsgrade - Drehzahl, Drehrichtung und Schwenkachsenwinkel - die individuell einstellbar sind. Eine individuelle Einstellbarkeit umfasst hierbei auch, dass die Einstellung von zwei oder mehr der Transportrollen 8a - 8d hinsichtlich aller oder einzelner der drei einstellbaren Freiheitsgrade übereinstimmt oder gemeinsam verstellbar ist. Die Transportrollen 8a - 8d sind also mit gleicher und/ oder unterschiedlicher Geschwindigkeit um ihre Drehachsen 10a - 10d einstellbar rotierbar. Die Schwenkachsenwinkel 14a - 14d von zwei oder mehr Transportrollen 8a - 8d sind übereinstimmend und/ oder voneinander abweichend einstellbar.

Wenn die Transportrollen 8a - 8d so angeordnet sind, dass ihre Drehachsen 10a - 10d in der Zeichenebene angeordnet sind, ist die Transportrichtung 34a - 34d der Transportrollen 8a - 8d in die Zeichenebene hinein oder aus ihr hinaus - je nach Drehsinn. Die Transportrollen 8a - 8d können wie in Figur 1 dargestellt zylinderartig, aber auch ballig, bombiert, kugeloberflächenartig oder anderweitig sphärisch ausgestaltet sein. Bei einer nicht orthogonal zur Transportebene 6 angeordneten Schwenkachse 12a und einer zylinderartigen Transportrolle 8a würde die Transportrolle 8a beim Verstellen der Drehachsachse 10a um die Schwenkachse 12a um einen Schwenkachsenwinkel 14a aus der Transportebene 6 herausragen.

Um ein gleichermaßen auf allen vier Transportrollen aufliegendes Gut 4 bei parallel eingestellten Drehachsen und übereinstimmenden Schwenkachsenwinkeln 14 auf der Stelle zu rotieren, können die beiden rechten Transportrollen 8c, 8d mit positivem Drehsinn und die beiden linken Transportrollen 8a, 8b mit negativem Drehsinn aber übereinstimmendem Drehzahlbetrag angetrieben werden - oder jeweils umgekehrt. Anstatt die Transportrollen 8a - 8d mit entgegengesetztem Drehsinn anzutreiben, könnten alternativ auch die Schwenkachsenwinkel 14a - 14d eingestellt werden.

Mindestens zwei voneinander abweichend einstellbare Transportrollen 8 sind erforderlich, um ein Gut 4 zu rotieren. Mit mehr Transportrollen 8 wird die Führung des Gutes 4 verbessert.

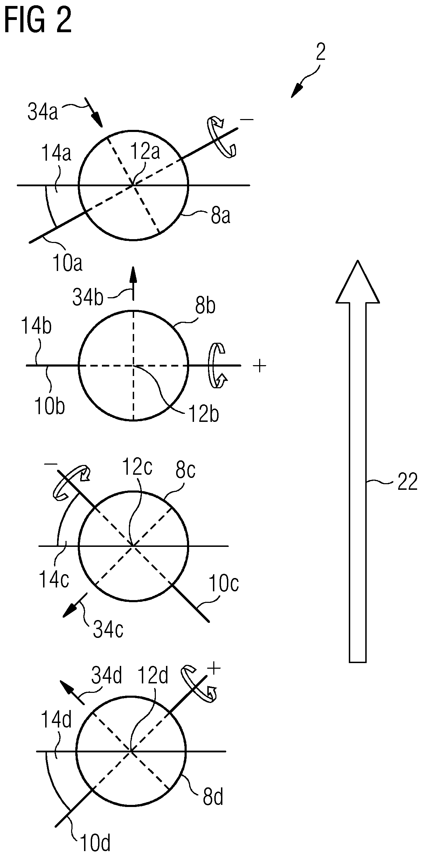

Figur 2 zeigt in Aufsicht einen Ausschnitt einer weiteren Fördereinheit 2 mit voneinander abweichend eingestellten Transportrollen 8a - 8d. Nur die Transportrichtung 34b der Transportrolle 8b stimmt mit der Haupttransportrichtung 22 der Fördereinheit 2 überein, der Schwenkachsenwinkel 14b beträgt hier 0°. Die Transportrollen 8a, 8c werden in negativer Drehrichtung angetrieben, die Transportrollen 8b, 8d in positiver Drehrichtung.

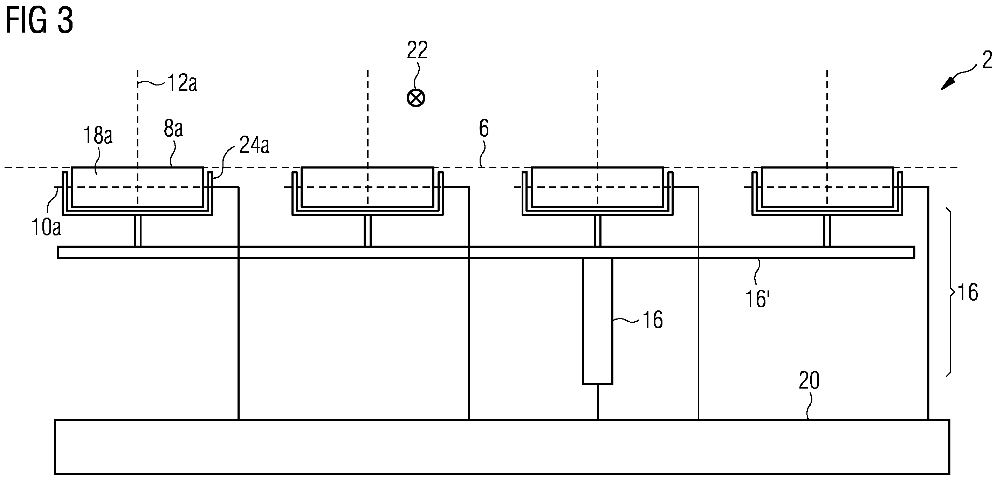

Figur 3 zeigt im Querschnitt eine Fördereinheit 2 mit einer Steuereinheit 20 und einer gemeinsamen Verstellvorrichtung 16 für alle Transportrollen 8a - 8d. Die Transportrollen 8a - 8d sind mit Transportrollenlagerungen 24a - 24d befestigt und jeweils mit der Steuereinheit 20 verbunden. Die Transportrollen 8a - 8d umfassen eigene, in die jeweilige Transportrolle 8a - 8d integrierte Antriebsmittel 18a - 18d. Die Steuereinheit 20 ist zum Ansteuern der Verstellvorrichtung 16 und der Antriebsmittel 18a - 18d ausgestaltet. Die Antriebsmittel 18a - 18d sind individuell ansteuerbar und regeln Drehrichtung und Drehgeschwindigkeit der jeweiligen Transportrolle 8a - 8d, hierzu eignet sich eine Ausgestaltung der Antriebsmittel 18a - 18d als Servoantrieb besonders gut, da diese für ein genaues individuelles Einstellen und Ansteuern ausgestaltet sind. Mit der Steuereinheit 20 können die Einstellungen der Transportrollen 8a - 8d angesteuert und verstellt werden.

Die mit der Steuereinheit 20 verbundene Verstellvorrichtung 16 ist mechanisch über eine Verstellvorrichtungsachse 16' mit den Transportrollenlagerungen 24a - 24d verbunden, so dass die Drehachsen 10a - 10d aller Transportrollen 8a - 8d gemeinsam um den gleichen Schwenkachsenwinkel 14a - 14d verstellt werden können. Die Drehachsen 10a - 10d bleiben somit stets parallel zueinander. Die Schwenkachsenwinkel 14a - 14d können stufenlos mit der Verstellvorrichtung 16 eingestellt werden und somit wahlfreie Winkelwerte zwischen 0° und 360° annehmen. Die stufenlose Einstellung beliebiger Winkelwerte erlaubt ein sehr genaues Einstellen der Transportrichtung 34a - 34d der Transportrollen 8a - 8d.

Es ist jedoch auch denkbar, die Schwenkachsenwinkel auf Werte zwischen beispielsweise +-45° oder +-90° zu beschränken. Dennoch kann durch Einstellung der Drehrichtung mit positivem und negativem Drehsinn jegliche Transportrichtung 34 der Transportrollen 8a - 8d erzielt werden. Eine Manipulation der Güter 4 wird auch durch unterschiedliche Drehzahlen und/ oder Drehrichtungen der Transportrollen 8a - 8d erreicht.

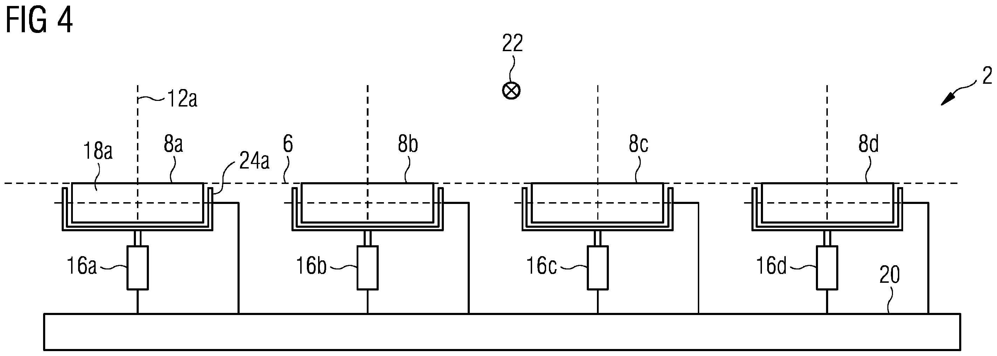

Figur 4 zeigt eine weitere Fördereinheit 2 mit einer eigenen Verstellvorrichtung 16a - 16d für jede Transportrolle. Jede der Transportrollen 8a - 8d umfasst ein eigenes, individuell einstellbares und individuell von der Steuereinheit 20 ansteuerbares Antriebsmittel 18a - 18d. Auch die Verstellvorrichtungen 16a - 16d sind individuell einstellbar und individuell von der Steuereinheit 20 ansteuerbar ausgestaltet.

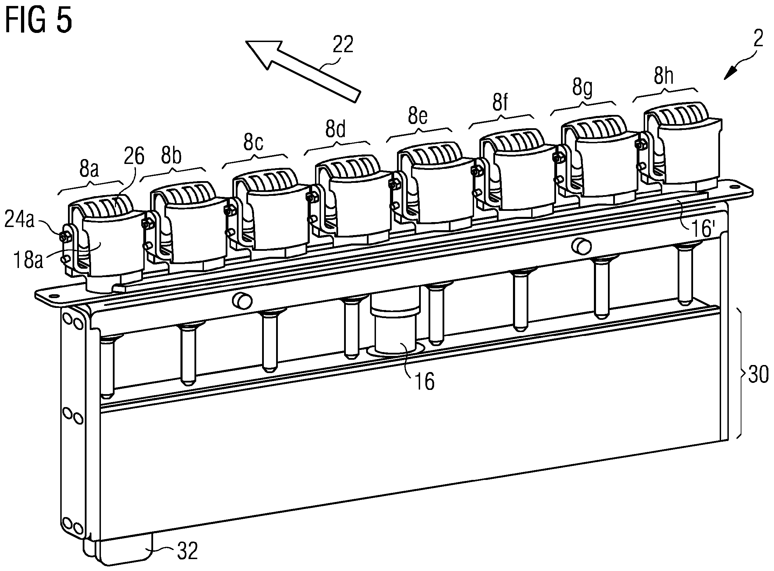

Figur 5 zeigt eine modulare Fördereinheit 2 mit geordnet entlang einer Linie angeordneten Transportrollen 8a - 8h. Die Fördereinheit 2 umfasst Transportrollenlagerungen 24a - 24h für die einzelnen Transportrollen 8a - 8h und jeweils als Außenmotor ausgestaltete Antriebsmittel 18a - 18h für die einzelnen Transportrollen 8a - 8h. Die modulare Fördereinheit 2 weist wie die Fördereinheit 2 von Figur 3 eine gemeinsame Verstellvorrichtung 16 mit einer Verstellvorrichtungsachse 16' für das gleichzeitige Verstellen der Drehachsen 10a - 10h aller Transportrollen 8a - 8h auf. Die modulare Fördereinheit 2 umfasst zudem eine kompakt verbaute Elektronikeinheit 30, welche neben einer Steuereinheit 20 zudem eine Verbindungsvorrichtung 32 zum unkomplizierten Verbinden mit einer übergeordneten Steuerung 21 umfasst.

Die Oberfläche der Transportrollen 8a - 8h ist teilweise mit einem als Reibriemen ausgestalteten Reibbelag 26 beschichtet, der die Übertragung der Bewegung der Transportrolle 8 auf das Gut 4 optimiert. Der Reibbelag ist dauerfest ausgestaltet und somit besonders wartungsarm.

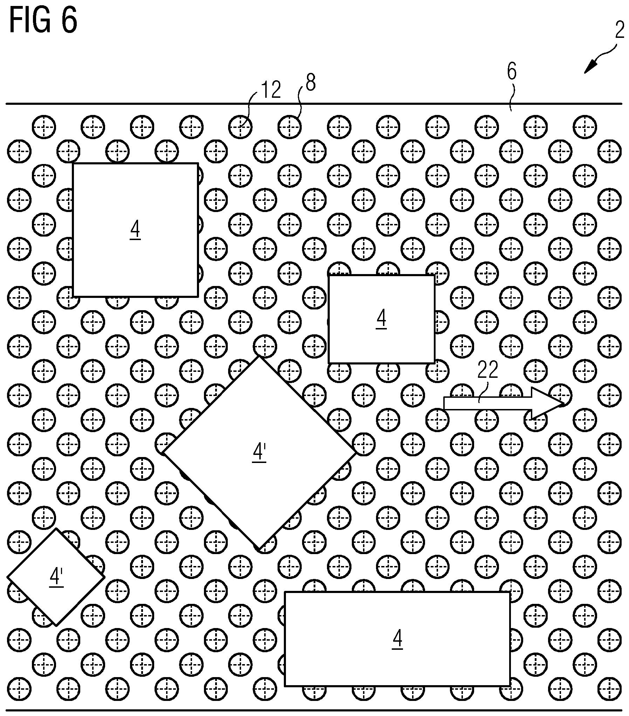

Figur 6 zeigt eine weitere Fördereinheit 2 in Aufsicht umfassend eine Vielzahl an Transportrollen 8 gemäß einer Ausführungsform der Erfindung. Die Transportrollen 8 sind rollenteppichartig angeordnet und individuell einstellbar und ansteuerbar. Die aufliegenden und zu transportierenden Güter 4, 4' werden entlang der Haupttransportrichtung 22 transportiert, wobei die nicht parallel zur Haupttransportrichtung 22 ausgerichteten Güter 4' während ihres Transports noch in ihrer Ausrichtung verändert werden, indem diejenigen Transportrollen 8, auf denen ein Gut 4 aufliegt bei gleichen oder voneinander abweichenden Schwenkachsenwinkeln 14 mit unterschiedlicher Drehzahl und/ oder Drehrichtung angetrieben werden.

Gemäß einer Ausführungsform sind die Transportrollen 8 einer Fördereinheit 2 kreisförmig angeordnet und eignen sich so noch besser zum Rotieren eines Guts 4. Mehrere Fördereinheiten 2 können beliebig hintereinander und/ oder nebeneinander angeordnet werden und ermöglichen so auch ein gleichzeitiges gerichtetes Transportieren und Rotieren mehrerer Güter 4, die von ihren Ausmaßen nicht zugleich auf den Transportrollen 8 einer Fördereinheit 2 aufliegen können. Die Fördereinheiten 2 werden koordiniert angesteuert.

### Bezugszeichenliste

- 2: Fördereinheit
- 4: Gut
- 6: Transportebene
- 8: Transportrolle
- 10: Drehachse
- 12: Schwenkachse
- 14: Schwenkachsenwinkel
- 16: Verstellvorrichtung
- 16': Verstellvorrichtungsachse
- 18: Antriebsmittel
- 20: Steuereinheit
- 22: Haupttransportrichtung
- 24: Transportrollenlagerung
- 26: Reibbelag
- 30: Elektronikeinheit umfassend Steuereinheit 20
- 32: Verbindungsvorrichtung
- 34: Transportrichtung

## Patentansprüche

1. Fördereinheit (2) zum Transport von Gütern (4) auf einer Transportebene (6) umfassend Transportrollen (8), wobei
a) die Transportrollen (8) mit einstellbarer Drehzahl und einstellbarer Drehrichtung um ihre jeweiligen Drehachsen (10) rotierbar sind;
b) die Drehachsen (10) der Transportrollen (8) um ihre jeweiligen Schwenkachsen (12) um einen eigenen Schwenkachsenwinkel (14) durch Rotation verstellbar sind; und
c) mindestens zwei der Transportrollen (8) voneinander abweichend einstellbar sind;
d) die Drehachse (10) im Wesentlichen parallel zur Transportebene (6) und die Schwenkachse (12) im Wesentlich orthogonal zur Transportebene (6) angeordnet ist;
e) die Transportrollen (8) in einem für einen Kontakt mit den Gütern (4) vorgesehenen Bereich eine ballige Oberfläche aufweisen;
f) die Fördereinheit (2) eine Verstellvorrichtung (16) umfasst, welche ausgestaltet ist, die Schwenkachsenwinkel (14) von zwei oder mehr Transportrollen (8) gemeinsam zu verstellen; und **dadurch gekennzeichnet, dass**
g) die Transportrollen (8) eigene, in die jeweilige Transportrolle (8) integrierte, Antriebsmittel (18) umfassen.

2. Fördereinheit (2) nach Anspruch 1, **dadurch gekennzeichnet, dass**
die Fördereinheit (2) ansteuerbare Antriebsmittel (18) zum Antreiben einer Transportrolle (8) umfasst.

3. Fördereinheit (2) nach Anspruch 2, **dadurch gekennzeichnet, dass**
die Antriebsmittel (18) als Servoantriebe ausgestaltet sind.

4. Fördereinheit (2) nach einem der Ansprüche 1 bis 3, **dadurch gekennzeichnet, dass**
die Transportrollen (8) in positiver Drehrichtung und/ oder negativer Drehrichtung antreibbar sind.

5. Fördereinheit (2) nach einem der Ansprüche 1 bis 4, **dadurch gekennzeichnet, dass**
der Schwenkachsenwinkel (14) kontinuierlich einstellbar ist.

6. Fördereinheit (2) nach einem der Ansprüche 1 bis 5, **dadurch gekennzeichnet, dass**
zwei oder mehr Transportrollen (8) geordnet angeordnet sind, beispielsweise entlang einer Linie.

7. Fördereinheit (2) nach einem der Ansprüche 1 bis 6, zudem umfassend
eine Steuereinheit (20), welche ausgestaltet ist, die Transportrollen (8) anzusteuern.

8. Fördereinheit (2) nach Anspruch 7, **dadurch gekennzeichnet, dass**
die Steuereinheit (20) ausgestaltet ist, die Transportrollen (8) in Abhängigkeit von Position und/ oder Ausrichtung eines oder mehrerer Güter (4) anzusteuern.

9. Verfahren zum Einstellen einer Fördereinheit (2) umfassend Transportrollen (8) zum Transport von Gütern (4) auf einer Transportebene (6), wobei
- die Transportrollen (8) mit einstellbarer Drehzahl und einstellbarer Drehrichtung um ihre jeweiligen Drehachsen (10) rotierbar sind;
- die Drehachse (10) im Wesentlichen parallel zur Transportebene (6) und die Schwenkachse (12) im Wesentlich orthogonal zur Transportebene (6) angeordnet ist;
- die Transportrollen (8) in einem für einen Kontakt mit den Gütern (4) vorgesehenen Bereich eine ballige Oberfläche aufweisen;
die Fördereinheit (2) eine Verstellvorrichtung (16) umfasst, welche ausgestaltet ist, die Schwenkachsenwinkel (14) von zwei oder mehr Transportrollen (8) gemeinsam zu verstellen; und
- die Drehachsen (10) der Transportrollen (8) um ihre jeweiligen Schwenkachsen (12) um einen eigenen Schwenkachsenwinkel (14) durch Rotation verstellbar sind;
umfassend die Verfahrensschritte
a) die Drehzahl, die Drehrichtung und die Schwenkachsenwinkel (14) der Transportrollen (8) der Fördereinheit (2) werden individuell eingestellt, wobei die Schwenkachsenwinkel (14) von zwei oder mehr Transportrollen (8) gemeinsam mittels der Verstellvorrichtung (16) verstellt werden;
b) ein Gut (4) wird von den eingestellten Transportrollen (8) transportiert, **dadurch gekennzeichnet, dass** die Transportrollen (8) eigene, in die jeweilige Transportrolle (8) integrierte Antriebsmittel (18), umfassen.

10. Verfahren nach Anspruch 9, **dadurch gekennzeichnet, dass** Drehzahl und/ oder Drehrichtung und/ oder Schwenkachsenwinkel (14) von mindestens zwei der Transportrollen (8) der Fördereinheit (2) voneinander abweichend eingestellt werden.

11. Verfahren nach einem der Ansprüche 9 bis 10, zudem umfassend den Verfahrensschritt
zwei oder mehr Fördereinheiten (2) werden koordiniert eingestellt.

## Claims

1. Conveyor unit (2) for transporting goods (4) on a transport level (6) comprising transport rollers (8), wherein
a) the transport rollers (8) can be rotated about their respective axes of rotation (10) at an adjustable speed and in an adjustable direction of rotation;
b) the axes of rotation (10) of the transport rollers (8) are adjustable by rotation about their respective pivot axes (12) about their own pivot axis angle (14); and
c) at least two of the transport rollers (8) can be adjusted differently from one another;
d) the axis of rotation (10) is arranged substantially parallel to the transport level (6) and the pivot axis (12) is arranged substantially orthogonal to the transport level (6);
e) the transport rollers (8) have a spherical surface in an area intended for contact with the goods (4);
f) the conveyor unit (2) comprises an adjusting device (16) which is designed to adjust the pivot axis angles (14) of two or more transport rollers (8) together; and **characterized in that**
g) the transport rollers (8) comprise their own drive means (18) integrated into the respective transport roller (8).

2. Conveyor unit (2) according to claim 1, **characterized in that**
the conveyor unit (2) comprises controllable drive means (18) for driving a transport roller (8).

3. Conveyor unit (2) according to claim 2, **characterized in that**
the drive means (18) are designed as servo drives.

4. Conveyor unit (2) according to one of claims 1 to 3, **characterized in that**
the transport rollers (8) can be driven in a positive direction of rotation and/or a negative direction of rotation.

5. Conveyor unit (2) according to one of claims 1 to **4, characterized in that**
the pivot axis angle (14) is continuously adjustable.

6. Conveyor unit (2) according to one of claims 1 to **5, characterized in that**
two or more transport rollers (8) are arranged in an orderly fashion, for example along a line.

7. Conveyor unit (2) according to one of claims 1 to 6, further comprising
a control unit (20) which is designed to control the transport rollers (8).

8. Conveyor unit (2) according to claim 7, **characterized in that**
the control unit (20) is designed to control the transport rollers (8) as a function of the position and/or orientation of one or more goods (4).

9. Method for adjusting a conveyor unit (2) comprising transport rollers (8) for transporting goods (4) on a transport level (6), wherein
- the transport rollers (8) can be rotated about their respective axes of rotation (10) at an adjustable speed and in an adjustable direction of rotation;
- the axis of rotation (10) is arranged essentially parallel to the transport level (6) and the pivot axis (12) is arranged essentially orthogonal to the transport level (6);
- the transport rollers (8) have a crowned surface in an area intended for contact with the goods (4);
the conveyor unit (2) comprises an adjusting device (16) which is designed to adjust the pivot axis angles (14) of two or more transport rollers (8) together; and
- the axes of rotation (10) of the transport rollers (8) can be adjusted by rotation about their respective pivot axes (12) about their own pivot axis angle (14);
comprising the process steps
a) the speed, the direction of rotation and the pivot axis angles (14) of the transport rollers (8) of the conveyor unit (2) are adjusted individually, wherein the pivot axis angles (14) of two or more transport rollers (8) are adjusted jointly by means of the adjusting device (16);
b) a good (4) is transported by the adjusted transport rollers (8), **characterized in that**
- the transport rollers (8) comprise their own drive means (18) integrated into the respective transport roller (8).

10. Process according to claim 9, **characterized in that** speed and/or direction of rotation and/or pivot axis angle (14) of at least two of the transport rollers (8) of the conveyor unit (2) can be set to differ from one another.

11. Method according to one of claims 9 to 10, further comprising the method step of
two or more conveyor units (2) are set in a coordinated manner.

## Revendications

1. Unité de convoyage (2) pour transporter des marchandises (4) sur un plan de transport (6) comprenant des rouleaux de transport (8),
dans laquelle
a) les rouleaux de transport (8) peuvent être mis en rotation autour de leurs axes de rotation (10) respectifs avec une vitesse de rotation réglable et un sens de rotation réglable ;
b) par rotation autour de leurs axes de pivotement respectifs (12), les axes de rotation (10) des rouleaux de transport (8) sont déplaçables de leur propre angle d'axe de pivotement (14) ; et
c) au moins deux des rouleaux de transport (8) peuvent être réglés différemment l'un de l'autre ;
d) l'axe de rotation (10) est sensiblement parallèle au plan de transport (6), et l'axe de pivotement (12) est sensiblement orthogonal au plan de transport (6) ;
e) les rouleaux de transport (8) présentent une surface bombée dans une zone prévue pour un contact avec les marchandises (4) ;
f) l'unité de convoyage (2) comprend un dispositif de réglage (16) conçu pour régler conjointement les angles d'axe de pivotement (14) de deux ou plusieurs rouleaux de transport (8) ;
**caractérisée en ce que**
g) les rouleaux de transport (8) comprennent leurs propres moyens d'entraînement (18) intégrés dans le rouleau de transport (8) respectif.

2. Unité de convoyage (2) selon la revendication 1,
**caractérisée en ce que**
l'unité de convoyage (2) comprend des moyens d'entraînement (18) pilotables pour entraîner un rouleau de transport (8).

3. Unité de convoyage (2) selon la revendication 2,
**caractérisée en ce que**
les moyens d'entraînement (18) sont conçus comme des servocommandes.

4. Unité de convoyage (2) selon l'une des revendications 1 à 3,
**caractérisée en ce que**
les rouleaux de transport (8) peuvent être entraînés dans le sens de rotation positif et/ou dans le sens de rotation négatif.

5. Unité de convoyage (2) selon l'une des revendications 1 à 4,
**caractérisée en ce que**
l'angle d'axe de pivotement (14) est réglable en continu.

6. Unité de convoyage (2) selon l'une des revendications 1 à 5, **caractérisée en ce que**
deux ou plusieurs rouleaux de transport (8) sont disposés de manière ordonnée, par exemple le long d'une ligne.

7. Unité de convoyage (2) selon l'une des revendications 1 à 6, comprenant en outre
une unité de commande (20) conçue pour piloter les rouleaux de transport (8).

8. Unité de convoyage (2) selon la revendication 7,
**caractérisée en ce que**
l'unité de commande (20) est conçue pour piloter les rouleaux de transport (8) en fonction de la position et/ou de l'orientation d'une ou plusieurs marchandises (4).

9. Procédé de réglage d'une unité de convoyage (2) comprenant des rouleaux de transport (8) pour transporter des marchandises (4) sur un plan de transport (6), dans lequel
- les rouleaux de transport (8) peuvent être mis en rotation autour de leurs axes de rotation respectifs (10) avec une vitesse de rotation réglable et un sens de rotation réglable ;
- l'axe de rotation (10) est sensiblement parallèle au plan de transport (6) et l'axe de pivotement (12) est sensiblement orthogonal au plan de transport (6) ;
- les rouleaux de transport (8) présentent une surface bombée dans une zone prévue pour un contact avec les marchandises (4) ;
l'unité de convoyage (2) comprend un dispositif de réglage (16) conçu pour régler conjointement les angles d'axe de pivotement (14) de deux ou plusieurs rouleaux de transport (8) ;
- par rotation autour de leurs axes de pivotement respectifs (12), les axes de rotation (10) des rouleaux de transport (8) sont déplaçables de leur propre angle d'axe de pivotement (14) ;
comprenant les étapes de procédé consistant à
a) régler individuellement la vitesse de rotation, le sens de rotation et les angles d'axe de pivotement (14) des rouleaux de transport (8) de l'unité de convoyage (2), les angles d'axe de pivotement (14) de deux ou plusieurs rouleaux de transport (8) étant réglés conjointement au moyen du dispositif de réglage (16) ;
b) transporter une marchandise (4) au moyen des rouleaux de transport (8) réglés,
**caractérisé en ce que**
les rouleaux de transport (8) comprennent leurs propres moyens d'entraînement (18) intégrés dans le rouleau de transport (8) respectif.

10. Procédé selon la revendication 9,
**caractérisé en ce que**
la vitesse de rotation et/ou le sens de rotation et/ou l'angle d'axe de pivotement (14) d'au moins deux des rouleaux de transport (8) de l'unité de convoyage (2) sont réglés différemment les uns des autres.

11. Procédé selon l'une des revendications 9 à 10,
comprenant en outre l'étape de procédé consistant à
régler deux ou plusieurs unités de convoyage (2) de manière coordonnée.
